(19) **Europäisches Patentamt**
**European Patent Office**
**Office européen des brevets**

(11) **EP 3 571 757 B1**

(12) **EUROPEAN PATENT SPECIFICATION**

(45) Date of publication and mention
of the grant of the patent:
**03.01.2024 Bulletin 2024/01**

(21) Application number: **17701990.8**

(22) Date of filing: **17.01.2017**

(51) International Patent Classification (IPC):
**H02M 1/00** *(2006.01)*      **H02M 7/483** *(2007.01)*

(52) Cooperative Patent Classification (CPC):
**H02M 7/483; H02M 1/0025; H02M 7/4835;**
**H02M 1/0003**

(86) International application number:
**PCT/DK2017/050007**

(87) International publication number:
**WO 2018/133907 (26.07.2018 Gazette 2018/30)**

(54) **ENERGY RESET OF A MODULAR MULTILEVEL CONVERTER**

ENERGIERÜCKSTELLUNG EINES MODULAREN MEHRPEGELUMSETZERS

REMISE À ZÉRO D'ÉNERGIE D'UN CONVERTISSEUR MULTINIVEAU MODULAIRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**27.11.2019 Bulletin 2019/48**

(73) Proprietor: **Powercon A/S**
**9560 Hadsund (DK)**

(72) Inventors:
• **THØGERSEN, Paul Bach**
**9220 Aalborg Ø (DK)**
• **ABRAHAMSEN, Flemming**
**9310 Vodskov (DK)**
• **JØRGENSEN, Allan Holm**
**9220 Aalborg Ø (DK)**

(74) Representative: **Patentgruppen A/S**
**Aaboulevarden 31, 4th Floor**
**8000 Aarhus C (DK)**

(56) References cited:
• **STEFAN P ENGEL ET AL: "Control of the Modular Multi-Level Converter for minimized cell capacitance", 2011 14TH EUROPEAN CONFERENCE ON POWER ELECTRONICS AND APPLICATIONS (EPE 2011) : BIRMINGHAM, UNITED KINGDOM, 30 AUGUST - 1 SEPTEMBER 2011, 1 January 2011 (2011-01-01), pages 1-10, XP055312816, Piscataway, NJ ISBN: 978-1-61284-167-0**
• **JAE-JUNG JUNG ET AL: "Control of the Modular Multilevel Converter for variable-speed drives", POWER ELECTRONICS, DRIVES AND ENERGY SYSTEMS (PEDES), 2012 IEEE INTERNATIONAL CONFERENCE ON, IEEE, 16 December 2012 (2012-12-16), pages 1-6, XP032346551, DOI: 10.1109/PEDES.2012.6484494 ISBN: 978-1-4673-4506-4**
• **JOHANNES KOLB ET AL: "Straight forward vector control of the Modular Multilevel Converter for feeding three-phase machines over their complete frequency range", IECON 2011 - 37TH ANNUAL CONFERENCE ON IEEE INDUSTRIAL ELECTRONICS SOCIETY, IEEE, 7 November 2011 (2011-11-07), pages 1596-1601, XP032104719, DOI: 10.1109/IECON.2011.6119545 ISBN: 978-1-61284-969-0**

EP 3 571 757 B1

- LI BINBIN ET AL: "An Improved Circulating Current Injection Method for Modular Multilevel Converters in Variable-Speed Drives", IEEE TRANSACTIONS ON INDUSTRIAL ELECTRONICS, IEEE SERVICE CENTER, PISCATAWAY, NJ, USA, vol. 63, no. 11, 1 November 2016 (2016-11-01), pages 7215-7225, XP011625160, ISSN: 0278-0046, DOI: 10.1109/TIE.2016.2547899 [retrieved on 2016-10-07]
- DU SIXING ET AL: "An Active Cross-Connected Modular Multilevel Converter (AC-MMC) for a Medium-Voltage Motor Drive", IEEE TRANSACTIONS ON INDUSTRIAL ELECTRONICS, IEEE SERVICE CENTER, PISCATAWAY, NJ, USA, vol. 63, no. 8, 1 August 2016 (2016-08-01) , pages 4707-4717, XP011616265, ISSN: 0278-0046, DOI: 10.1109/TIE.2016.2547875 [retrieved on 2016-07-08]
- MAKOTO HAGIWARA ET AL: "Start-Up and Low-Speed Operation of an Electric Motor Driven by a Modular Multilevel Cascade Inverter", IEEE TRANSACTIONS ON INDUSTRY APPLICATIONS, IEEE SERVICE CENTER, PISCATAWAY, NJ, US, vol. 49, no. 4, 1 July 2013 (2013-07-01), pages 1556-1565, XP011520273, ISSN: 0093-9994, DOI: 10.1109/TIA.2013.2256331

## Description

### Field of the invention

The invention relates to a method of controlling a modular multilevel converter in order to control the energy within the arms of the modular multilevel converter.

### Background of the invention

Power Converters including Modular Multilevel Converters (referred to as MMC converters) typically comprises a plurality of so-called arms, phases or branches which with reference to DC potential may be referred to as upper or lower arm. Such power converters often comprise two similar inverters, back-to-back connected, sometimes referred to as grid side and generator (or motor) side inverters.

Control of power converters is typically done in order to operate in an optimized manner with regards to flexibility, losses, etc. However, energy optimized control of a power converter is almost always balanced between different types of losses where the sum of such losses is minimized.

Known methods of controlling power converters are found e.g. in CN104993533 where an energy balanced control between arms is disclosed. A balanced energy control can be achieved between the upper and lower arm by regulators, for example PI or PR regulators.

Another known method of controlling power converters with an MMC topology is found in WO2015117637. Here relative main voltages are used to control the relative voltage between independent circuits. Internal main voltages are used to control completely the balance of the energy stored in the converter branches. This is accomplished by selecting values for the AC and DC components of each main voltage.

Another prior art document is a paper entitled "Control of the Modular Multi-Level Converter for Minimized Cell Capacitance" [Engel, De Doncker]. This paper describes a method to inject harmonic into the circulating current of the Modular Multilevel Converter with the aim to reduce cell capacitance in 50/60 Hz applications with an energy control period equal to the fundamental period.

The following two prior art papers both relates to injecting a sinusoidal voltage and current to reduce capacitor voltage ripple in low output frequency mode. The injection has effect on the voltage ripple. The papers are entitled "Control of the Modular Multilevel Converter for Variable-speed Drives" [Jung, Lee, Sul] and "Straight forward vector control of Modular Multilevel Converter ..." [Kolb, Kammerer, Braun],

Finally, the prior art includes the paper "An improved Circulating Current Injection Method for Modular Multilevel Converters in Variable-Speed Drives" [Li, Zho et. Al.]. This paper describes in its introduction several methods of improving effect in cell voltage ripple in relation to injected voltage and current peak values including the ones mentioned in the above three papers. This paper refers to methods whereby is not possible to fully maximize and to fully benefit from the effect of the applied common-mode voltage.

### Brief description of the invention

It is therefore an object of the present invention to provide an alternative method of controlling the energy in the branches of an MMC power converter. Accordingly, it is an object of the invention to control the energy level of the arms of a power converter, wherein the arms comprise a plurality of switching modules controlled in successive energy control periods by a control signal from a converter controller, wherein the energy levels of the individual arms are controlled in the successive energy control periods according to the following steps: clamping the phase output voltage to a determined value having a first voltage potential in a first part of the energy control period, clamping the phase output voltage to a determined value having a second voltage potential in a second part of the energy control period, wherein the first and second voltage potentials are different, and controlling circulating currents in the arms coordinated with the phase output voltage clamping in order to obtain an energy reset within the energy control period.

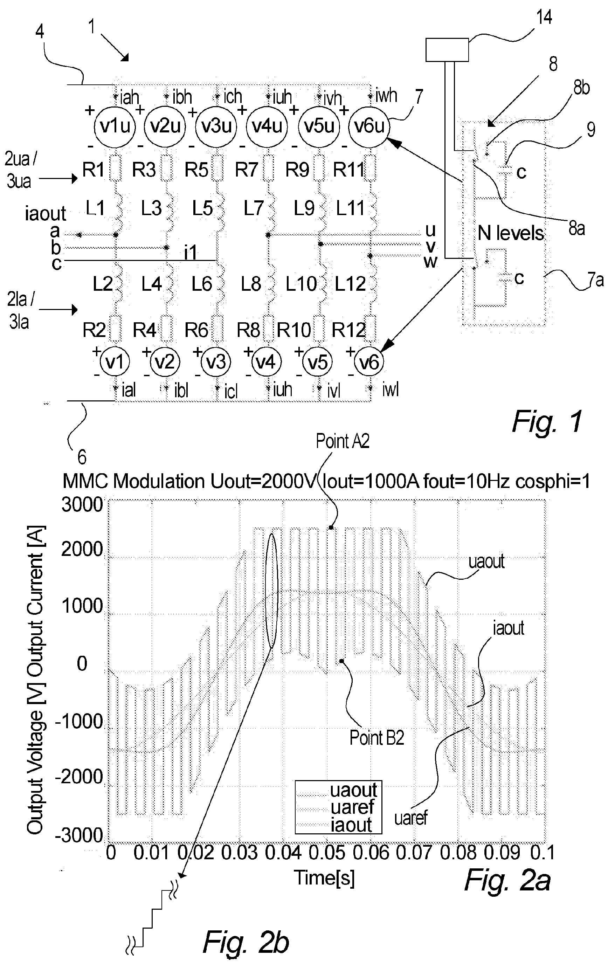

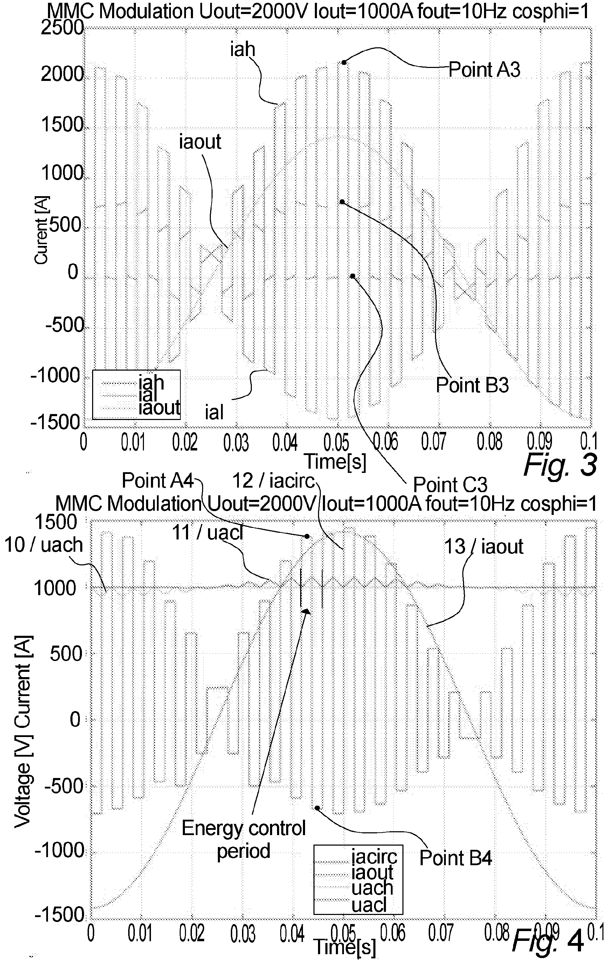

Coordinated control of the circulating currents should be understood as controlling the circulating currents square waves synchronized to the clamped output voltage illustrated in figure 2 and 4 (on figure 4 iacirc is following the uaout of figure 2) Preferably the phase output voltage of each arm is controlled according to the inventive method.

The control method of the present application comprises the features of independent claim 1.

According to an embodiment of the invention, the circulating current is controlled in a square wave fashion. This is advantageous to minimize the RMS current load on the switches and capacitors.

The first voltage potential substantially equals the positive rail potential and wherein the second voltage potential substantially equals the negative rail potential. Such hard clamping to the positive / negative rail potential of the first / second voltage potential (or vice versa) is preferred in that in this way the difference between the first and second voltage potential is the largest.

It should be mentioned that it is preferred that the first voltage potential completely equals the positive rail potential and that the second voltage potential equals the negative potential (or vice versa). However, if the values are not completely equal, the best result is obtained when the first / second voltages potentials are as close as possible to the positive / negative rail potentials.

According to an embodiment of the invention, the first and / or second voltage potential is kept at a controllable distance from the rail potential, below a typical module voltage, preferably between 10% and 50% of the typical module voltage. Such soft clamping is advantageous sin that it gives freedom to facilitate conducting current in both the upper and lower arm at the same time and therefore it is possible to fine tune the energy level in the arm i.e. a feedback control used for compensating for minor errors of the feed forward control. This is especially advantageous if at least one of the modules is controlled based on PWM.

The controllable distance between the first and / or voltage potential rail potential and the module voltage is preferably small i.e. less than 50% preferably less than 25% most preferably less than 15%. An example of a typical module voltage could be 1000V for 1700V IGBT switches and 750V for 1200V IGBT switches.

The converter controller is adapted to reset the energy level in the arm of the power converter by control of circulating currents within the power converter. This is advantageous in that the converter then is controlled in a way which reduces the need of having large capacitors thereby cost, weight and design requirements are reduced. The energy reset is based on knowledge of the capacitor voltage in the module which is used as basis for a calculation of calculation of the charge / discharge of the capacitors to end at a desired energy level resetting the energy in an energy control period i.e. a feed forward control

According to an embodiment of the invention, the energy level in the arm is reset or controlled to a determined level in each of the successive control periods. This is advantageous in that then the capacitor voltage is controlled and therefore does not slowly drift away and in worst case ending at a level out of a range of e.g. 800V to 1300V which may damage or at least trip the operation of the MMC. An example of a determined level voltage could be the reference voltage +/- 10 V.

According to an embodiment of the invention, the phase output voltages are clamped alternatingly between the first voltage potential and the second voltage potential without control delay. This is advantageous in that the there is no dv/dt limitations.

According to an embodiment of the invention, the phase output voltage levels are clamped in an alternating fashion between the positive and the negative rail potentials by controlling the MMC switching sequence (modulation pattern) in such a way, that the (average) common mode voltage rate of change over time (dU/dt) effectively can be controlled and limited to any specified value. This is advantageous in that then the dv/dt can be controlled and limited to any specific value which is advantageous in that dv/dt limitations may protect isolation of windings of machines coupled to the MMC. Preferably the common mode voltage is an average common mode voltage which may equal a module voltage. Hence by delaying the switching of individual modules the common mode voltage rate of change over time can be controlled.

According to an embodiment of the invention, the output voltage levels are clamped in an alternating fashion between the positive and the negative rail potentials in a module energy control cycle, wherein the energy control cycle frequency is high, preferably over 100 cycles per second. Having a relatively high energy control cycle frequency e.g. in the range of 100 to 10000 cycles per second is advantageous in order to limit the necessary MMC module capacitance. In MW applications the preferred range is between 100 and 1000 Hz. Preferably the frequency is between 100 and 1000 cycles per second i.e. a frequency between 100 and 1000Hz in order to limit the necessary capacitance of the switching modules. Hence the higher frequency, the lower capacitance needed. Examples of frequency could be 200Hz or 240Hz.

According to an embodiment of the invention, the phase output voltages are clamped alternatingly between the first voltage potential and the second voltage potential in an energy control period optimized by continuous optimization of duty cycle split between clamping the phase output voltages to the first voltage potential and to the second voltage potential. Preferably the optimization is made for criteria's such as e.g. minimum peak currents or minimum losses. By splitting the duty cycle (i.e. the two times T1 and T2 of a control period) it is possible to change the circulating current e.g. reduce maximum level of the circulating current and thereby reduce losses. Further it is possible to establish models calculating losses e.g. in switches and capacitors and thereby find the best level of the circulating current. One example of duty cycle split is T1=T2.

According to an embodiment of the invention, the phase output voltages are clamped alternatingly between the first voltage potential and the second voltage potential in an energy control period, wherein the frequency of the energy control period is continuously optimized and updated depending on load of the MMC. This is advantageous in that losses can be minimized if e.g. the frequency of the energy control period is reduced from 240Hz to 120Hz which is possible when the load on the MMC is below e.g. 50%-75% of rated load.

According to an embodiment of the invention, the phase output voltages are clamped alternatingly between the first voltage potential and the second voltage potential with an energy control period independent of the fundamental frequency of the MMC output. This is advantageous if the energy balance is desired to be the same in all fundamental frequencies of the MMC output e.g. in a range of frequencies. An example could be if the fundamental frequency is in a first period of time e.g. during startup of a wind turbine is between or rises from 0Hz to e.g. 5Hz. In this first period of time the energy control frequency might be 240Hz and at fundamental frequencies above e.g. 5Hz the energy control frequency could be an integer multiplied by the fundamental frequency.

Hence it is advantageous that the energy control frequency is dynamic over time or relative to the fundamental frequency of the MMC output and thereby facilitating changing when the fundamental frequency changes.

According to an embodiment of the invention, the energy reset control is based on predicted values of load power, load current and output voltage in the energy control period. Especially during startup of e.g. a wind turbine it is advantageous within each of the energy control periods to predict or calculate in the converter controller a reference for the circulating currents in that period to facilitate an energy reset within this period. The prediction is preferably reaching 1 or 2 milliseconds into the future. This is also referred to as feed forward control and its dynamic nature is especially useful to compensate for larger changes in e.g. load power, load current and / or output voltage of the MMC.

According to an embodiment of the invention, the energy reset control includes a feedback from the individual modules at least including information of the capacitor voltage and wherein this feedback is used as basis for controlling at least one module in an arm according to a control strategy different from the control strategy controlling the other module of that arm. The converter controller may control the modules of an arm according to different control strategies. However, preferably all modules are controlled to switch at a frequency determined or adjusted by means of parameters in the converter controller. The level of energy reset performed by the abovementioned feedforward control may not facilitate a desired level of energy reset. As an example the energy may be 95% reset. The level of energy reset can be detected by information of the capacitor voltage of the modules from the feedback from the modules. Hence, based on the feedback at least one module can be Pulse Width Modulation controlled to facilitate a desired flow of circulating current through a clamped part of an arm to ensure the energy reset is as desired within an energy control period. Such PWM controlled module may facilitate the last 5% energy reset from the above example.

According to an embodiment of the invention, the energy reset control facilitates a fixed module voltage reference level. To facilitate a fixed voltage level is important for the safe and stabile control of the MMC. In an example the module voltage is fixed at 1000V independent on generator and grid voltage. If the variations of the generator and / or grid voltage are ±10%, the converter controller has to account for this possible variation by being facilitating a module voltage of 1100V

According to an embodiment of the invention, the energy reset control facilitates a variable module voltage reference. Facilitating variable module voltage is advantageous in that this can reduce losses in the MMC. Hence fixing the module voltage at 1100V in the above example is only necessary in a worst case scenario and therefore losses can be reduced if the module voltage is only 900V when possible.

According to an embodiment of the invention, the circulating current components used for energy reset control are controlled in a substantially square wave fashion. A square wave fashion controlled energy reset is advantageous in that this facilitates a fast current regulation in that the same average current is obtained at lower maximum level than compared to a sinusoidal wave fashion control.

According to an embodiment of the invention, the energy reset control is coordinated within the converter legs in such a way, that the DC-rail current RMS value is minimized. This is advantageous in that then a minimum ripple / harmonic content is obtained.

According to an embodiment of the invention, the energy reset control is coordinated within all converter legs in such a way, that all converter module capacitor voltage ripple values are minimized.

According to an embodiment of the invention, the power converter is a modular multilevel converter.

More over the invention relates to the use of a modular multilevel converter controlled according to any of the preceding claims in a wind turbine.

**Figures**

A few exemplary embodiments of the invention will be described in more detail in the following with reference to the figures. The figures all illustrate examples of embodiments of the present invention and examples of the result of controlling a modular multilevel converter according to the present invention.

| | |
|---|---|
| Figure 1 | illustrates a modular multilevel converter, |
| Figure 2a | illustrates a 'clamped' phase output voltage waveform for a phase, |
| Figure 2b | illustrates an example of a rising edge of the output voltage of figure 2A |
| Figure 3 | illustrates examples of currents of an arm, |
| Figure 4 | illustrates an example of the relationship between the circulating currents and the upper and lower arm module voltage, |
| Figures 5, 10, 14 and 15 | illustrates examples of waveforms for arm currents and module voltages over 1 fundamental |

period,

Figures 6, 11 and 16    illustrates examples of waveforms for module voltages and currents over 1 fundamental period,

Figures 7 and 12    illustrates examples of waveforms for phase output voltage and current over 1 fundamental period,

Figures 8, 9 and 13    illustrates examples of waveforms for arm currents over 1 fundamental period,

Figure 17    illustrates a MMC 6-level 2-leg inverter current waveforms for DC-output operation, and

Figure 18    illustrates examples of the effect of eliminating DC-link current harmonics.

## Detailed description of the invention

Figure 1 illustrates a power converter 1. The inventive method of controlling the energy level could be used for other types of power converters, however, in this document the invention will be described in relation to a modular multilevel converter (MMC: Modular Multilevel Converter)

The MMC 1 shown in Figure 1 comprises a first and a second inverter, connected 'back-to-back', each having three legs, denoted a-b-c and u-v-w, respectively. Each of the six legs illustrated in Figure 1 are divided in upper arms and lower arms.

Each of the arms comprises a plurality of switching modules 7 connected in series 7a (from 1 to 30 or even more modules), each switching module 7 within the series connection of switching modules 7 preferably comprises a switch 8, a capacitor 9 and a not illustrated diode. The switch 8 may be any kind of semiconductor switch such as an IGBT, MOSFET and the like having embedded or external not illustrated antiparallel diodes. The switches 8 of the switching modules 7 are controlled by a converter controller 14 in order to control the output waveforms (voltage and/or current) according to the desired operation.

The illustrated switch 8 has two positions the first referred to as bypass switched on and the second referred to as capacitor switched on. Reference is made to the capacitor 9 which is bypassed when the bypass switch is "on" (the bypass position 8a) and is part of the current path through the arm, when the capacitor switch is "on" (the capacitor position 8b).

The module voltage is determined by the positon of the switch, hence in the bypass positon the module voltage equals a small (positive or negative) conduction voltage drop over the bypass switch (e.g. in the region of 1-2V), and in the capacitor position the module voltage equals the capacitor voltage minus a small (positive or negative) conduction voltage drop over the capacitor switch (e.g. in the region of 1000V).

Between the positive (+Udc) 4 and the negative (-Udc) 6 rail potentials the DC link voltage can be measured. The leg voltage is the sum of the contributions of the individual module voltages of the upper and lower arms, of course the main contribution origins from the modules 7, which are not bypassed.

The number of switching modules 7, and the capacity of the components hereof in each arm is determining by the output voltage and output current (giving the power rating) to be handled by the MMC 1. Accordingly, it is possible to increase the voltage (and power) capacity of the MMC 1 by adding more switching modules in series 7 for a given (module) current capacity.

The power converter 1 illustrated in figure 1 is a 3-phase AC to 3-phase AC MMC the load current of each of the arms 2, 3 could be measured somewhere in the arm, at the top or in the bottom (at 5) or inside one of the arm modules. Hence as illustrated current may flow both ways through the MMC 1.

As mentioned an arm may comprise a plurality of independently controllable switching modules connected in series according to the requirements to the output voltage and / or current. In a situation where the switches 8 of the modules 7 in e.g. the upper arm 2 are all in the bypass position 8a, the arm voltage of the upper arm 2 is equal to zero, and the phase output voltage (uaout) is equal to the positive rail voltage (+Udc).

The highest (positive) phase output voltage is referred to the positive rail potential (+Udc) when clamped hereto in the first part of one energy control period, and the lowest (negative) phase output voltage is referred to the negative rail potential (-Udc) when clamped hereto in the second part of the energy control period. An example of the resulting 'clamped' phase output voltage waveform for phase a is shown in Figure 2a. In reality, there will be a small difference (positive or negative) due to the conduction voltage drops in the series connected bypass switches, which will be neglected in the following, and also a certain voltage drop over the arm inductances, which should be taken into account for in the control system.

Clamping should be understood as the situation where all switches 8 of an (upper or lower) arm are in the bypass position 8a. Therefore, when looking at arms 2, 3 it is possible to clamp the highest positive phase output voltage in each inverter to the positive rail potential (+Udc) 4 by activating all bypass-switches in the actual upper arms. In the same way it is possible to activate all bypass-switches in the lowest negative lower arm in each inverter and thereby clamp the lowest phase output voltage in each inverter to the negative arm voltage (-Udc) 6. Notice, that it is not possible to clamp to both rails simultaneously within the same inverter. In fact, the difference between the (non-clamped) reference voltage (uaref) and the output voltage (uaout) shown in Figure 2a is equal to the additional common mode voltage added to all 3 inverter phase voltages by the clamping process done here.

If the switches 7 of an arm are in the capacitor position 8b the arm voltage equals the sum of the capacitor voltages 9 of the individual modules 7. If one or more of the switches 8 are in the bypass position 8a the arm voltage only includes a small contribution from these modules 7, the above mentioned conduction voltage drops.

The arm voltage can be controlled in several ways. The module capacitor voltages can be controlled (rather slowly) up and down, the number of 'active' modules can be controlled, and the average voltage contribution (in a defined control period) for each module can be controlled continuously from 0 to the actual capacitor voltage level by means of Pulse Width Modulation (PWM) control of the module switches. The module capacitors have a dual purpose of being voltage source as well as energy storage, so typically there will be some practical limitations on the possible capacitor voltage variations. Furthermore, the voltage variations are limited by the minimum arm and leg voltage demands, where the total leg possible/controllable voltage range in all operating points has to be equal to or bigger than the DC-link voltage, in order to be able to control the circulating leg current (defined below) at any time instant. In most practical applications, the arm voltages will be controlled by selecting a proper number of modules to be 'on' (capacitor switch on), and then select one module for PWM-operation for fine-tuning of the arm (average) voltage. In this way, the arm (and leg and output) average voltages can be controlled smoothly/continuously between the rail limitations with a minimum of switching. The PWM-operation is not discussed further, only the average voltage values are used (and plotted in Fig 2a). PWM-operation can also be used to make 'soft clamping' by keeping single modules fractionally connected in an otherwise clamped (all other modules bypassed) arm.

It should be mentioned that in the case, where the modules 7 comprise a full H-bridge, it is possible to control the arm voltage to three voltage levels which includes the 0V, and the positive and negative capacitor voltage. However half-bridge configurations of the modules 7 are chosen in a preferred embodiment of the invention.

The embodiment illustrated in figure 1 is a standard configuration of a MMC 1 and as mentioned the present invention relates to a method of controlling the energy level of the arms 2, 3 and thereby in the MMC 1 in order to be able to reduce the size of the capacitors 9 hereof as well as expanding the output frequency operational range downwards, all the way to (and including) DC operation. As will be explained in the following this is done by controlling the circulating currents 12 of the arms 2, 3.

Figure 2a illustrates a plot of the waveform for a MMC phase (phase) output voltage and current over 1 fundamental period. On figure 2a the voltage of e.g. first phase 2a (uaout), the reference voltage of that phase (uaref) and the output current (iaout) of that phase is illustrated. Similar plots could be made of the remaining two phases of a three phased MMC 1, such plots would then simply be displaced by ±120° in relative to the illustrated plot.

From figure 2a it can be derived that, the output frequency of the MMC (also referred to as the fundamental frequency) is approximately 10Hz (1 / 0,1 [s] (iaout) and the energy control frequency is approximately 250Hz (1/(0,01 [s]/2,5)) (uaout). Accordingly, the inverter is controlled in successive energy control periods with a frequency of approximately 250Hz and a fundamental frequency of the output phase current of approximately 10Hz in this example.

The frequencies of figure 2a are only examples, however it is preferred that the energy control frequency is relatively high, i.e. preferably above 100Hz and below 1000Hz, and the fundamental frequency is between 0Hz (DC) and 40Hz. Especially the possibility of controlling large machines, such as wind turbine generators, at low frequency, including starting/stopping from/to zero speed (DC), is very advantageous.

From figure 2a it is further illustrated that the arm voltage (uaout) is alternatingly clamped to the positive (2,5kV) and the negative rail potential (-2,5kV) respectively, i.e. the DC link voltage is in this illustrated example approximately 5kV.

The DC link voltage must be chosen higher than the maximum AC phase-phase peak voltage on either side (generator and grid) in order to keep the converter system controllable. In the illustrated (Figure 2a) the phase-phase output RMS voltage is 2kV, while the DC link voltage is 5kV, corresponding to a nominal AC voltage level around 3.3 kV on both sides (generator and grid).

The alternating clamping between the outer positions, i.e. the positive and negative rail potential, might not always be a preferred way of controlling the MMC 1. This is because it may lead to very steep gradients of the output voltage waveform (referred to as dv/dt). Such high dv/dt-values are not preferred, because it can be damaging to the insulation system of the machine (generator or motor or transformer) coupled to the MMC.

A possible solution to this problem is illustrated in figure 2b which illustrates a rising edge of the output voltage curve of figure 2 (uaout) in an enlarged view. It is illustrated that a leg comprising 2 arms, each comprising three switch modules 7 which are switched on, one by one with a small time delay dt, to reach the phase output voltage (uaout). The delay ("dt") between the switching of the modules (within 7) is preferably less than 2 microseconds, but could be controlled to any value required to reach a desired average dv/dt value of the output voltage. It should be mentioned, that the falling edge can be controlled in the same way to obtain a desired dv/dt value here also.

Hence, the present invention facilitates controlling the dv/dt to have a desired gradient by delaying the switching of the switch modules 7 and thereby filter modules can be avoided or at least significantly reduced. This is advantageous in that no filter, or at least a smaller size filter with components such as inductors, is needed which will lead to a reduction in the size and price of the MMC 1.

As indicated above, the control of the circulating currents in the arms 2, 3 is referred to energy control (or energy reset control) and in a comparison to the fundamental frequency current control is controlled at a much higher frequency. The bypass and capacitor switches are activated by the converter controller 14 with a rather low frequency, say 200 to 1000 Hz due to the associated switching losses, i.e. for efficiency reasons, while the control typically is done at a much higher frequency, say 2 to 20 kHz, due to the many series connected modules sharing the control/switching tasks. Accordingly the choice of energy control frequency is a balance between capacitor size (driving cost, weight and volume of the converter) and additional losses in the converter (switches) due to a higher number of switching's.

Hence according to the present invention the operation of the modules 7 of the MMC 1 is decoupled from the output frequency facilitating controlling of the energy level in particularly by resetting the arm energy. The energy control is preferably done by means of the high frequency clamping to the positive / negative rail potentials facilitating an energy reset in each control period.

This energy reset control facilitates operation of the MMC at very low output frequencies including DC which is very advantageous in relation to e.g. generator applications such as a wind turbine and as explained above prior art converter control does not allow such low frequency operation without power/current limitations.

The energy reset or energy level control should be understood as controlling the circulating currents 12 in the MMC preferably the control of the circulating currents facilitates resetting the energy of the arms within one energy control period. By energy reset should be understood a reset of the energy built up in the capacitors 9 of the switching modules 7. Energy reset is preferred in that it facilitates a reduction in the needed capacity of the capacitors 9 of the switching modules 7 i.e. smaller size capacitors are needed.

Accordingly, the present invention eliminates the need of large capacitors for energy balancing of the MMC reducing volume, weight and cost of the MMC 1.

Figure 3 illustrates the currents of e.g. the first arm 2a. The plot includes the current in the upper arm (iah), the current in the lower arm (ial) and the (phase) output current (iaout).

In figure 3 there is a simple relationship between the phase output current (iaout)and the currents in the upper and lower arms, respectively. Hence the current in the upper arm (iah) Point A minus the current in the lower arm (ial) Point B is equal to the phase output current (iaout), given by Kirchhoff's Law.

The upper and lower arm currents plotted in figure 3 are not sinusoidal waveforms, since it is a sum of the square wave circulating currents (see figure 4 iacirc / 12) and the phase output current.

As mentioned the control of the energy in the MMC 1 is based on control of the circulating currents and thereby the module capacitor voltages. Hence in the ideal situation when the arm current is 0 the arm capacitor voltages are fixed. Accordingly, at Point 3C the current is 0 and therefore the capacitor voltages are not changing.

When on the other hand the current is different from 0 energy is moved with the current and the capacitor voltages are changing. Due to the relation between voltage and current, the currents in the module capacitors of an arm (upper or lower) can be controlled to 0 by clamping the arm voltage to the positive / negative rail potential, i.e. bypassing all module capacitors simultaneously.

The relationship is illustrated when comparing figure 2a and figure 3. As can be seen in figure 2a, at the first part of the energy control period starting at time 0.05 Point A2, the arm voltage is clamped to the positive rail potential. At the second part of this energy control period Point B2 the arm voltage is clamped to the negative rail potential. At figure 3 at the energy control period starting at time 0,05 Point 3A current is flowing in the upper arm (iah) and during the second part of that control period Point 3C no current flow in the upper arm (iah).

Figure 4 illustrates the relationship between the circulating currents (iacirc) and the upper (uach) and lower (uacl) arm module voltage of e.g. the first arm 2a of the MMC 1. The phase output voltages are "hard clamped" i.e. alternating to the positive / negative rail potential for the highest/lowest phase output voltage, respectively (the resulting phase output voltage for phase a is shown in figure 2a).

From figure 4 it can be seen that during an "energy control period" the circulating current (iacirc) changing direction leading to charging / discharging of the capacitors of the modules 7 having switches in the capacitor position 8b. All capacitor voltages return to the reference values after each energy control cycle/period. Therefore, the converter can operate at any low output frequency (including DC) without restrictions, at least below a certain fraction (say 0.15 to 0.25) of the energy control frequency. At higher output frequencies, it will normally be more efficient to change to classical methods for the circulating current control, i.e. some combination of a DC-component supplying the power and an (optional) second harmonic component to reduce the (average) capacitor voltage ripple. The optimal changeover (output) frequency (and/or energy reset control frequency) is not a fixed value, but will change according to optimal combinations of module capacitor and switches (cost, size, weight, losses), which will depend on the application, as well as capacitor and semiconductor technology developments over time.

As mentioned the changing of position of the switch 8 between the bypass 8a and the capacitor 8b position is controlled by the converter controller 14. Hence the converter controller 14 is programmed to control the number of modules 7 in an arm having switches in the capacitor position 8b so that the arm voltage is equal or close to the DC link voltage. The converter controller 14 may be implemented as one or more industrial Programmable Logic Controller (PLC) which is well known in the art.

The converter controller 14 must control which of the modules 7 are switched on (in the capacitor position 8b) or off (bypassed) according to different strategies. A well-known control strategy is to always switch on the module with the lowest capacitor voltage, and switch off the module with the highest capacitor voltage, during positive arm (charging) currents, and vice versa for negative arm (discharging) currents.

This underlying control of which of the modules 7 having switches in the capacitor position 8b and in the bypass position 8a is controlling the energy level of the capacitors of the individual modules 7 and thereby in the arms. As an example the switch control determining which of the modules 7 should be bypassed could be made with a frequency in the range of 1 to 100 kHz. The minimum required control frequency (when all pulses are controlled individually) is equal to the number of modules per arm times the (average) switching frequency (per module switch), i.e. 5 kHz for a MMC with 10 arm modules and an average switching frequency of 500 Hz. On the other hand, a MMC with 50 modules and 2 kHz switching would require a 100 kHz control frequency.

Due to the feedback from the modules 7, the converter controller 14 knows the start level of the capacitor voltage of the modules and since it knows the current and the time each module the switch 8 of which is in the capacitor position, the converter controller 14 can predict the capacitor voltage at the end of each energy control period. In this way a feedforward control is made determining the energy level in the arms of the MMC.

Since the feed forward control is based on predicted values, it will not be 100% precise. Accordingly, the feed forward control can be combined with some feedback control based on measurements of the actual value of the capacitor voltage of the modules within 7, in order to avoid offset/drift problems in the control due to accumulated prediction errors.

Accordingly, it is preferred that the converter controller 14 receives feedback from the modules 7 at least including the level of the capacitor voltage.

In the illustrated energy control period it can be seen that during a first part, the lower arm voltage (uacl) increases and during the second part it decreases ending at the same level while the upper arm voltage is not changing. Hence this is an example of an ideal energy reset where the capacitor voltage of the lower arm modules increases when the output voltage of the arm is clamped to the positive rail potential and decreases when the output voltage is clamped to the negative rail potential.

In the following a more theoretically description of the invention will be made. As mentioned figure 1 illustrates a circuit model of a power converter 1 which in this document is referred to as a MMC. The output current iaout is given by the circuit model in figure 1, and Kirchhoff's law, i.e.:

$$\mathrm{iaout = iah - ial}$$

It should be mentioned that current could run both ways through the MMC making.

As mentioned Figure 4 illustrates a plot of circulating currents and voltages of one phase of the MMC 1 during one fundamental period.

The circulating current iacirc can be defined for each arm as:

$$\mathrm{iacirc = iah - iaout/2 = ial + iaout/2}$$

An analysis, deriving the invented power balancing method for a phase leg of an inverter with AC load disclosed here, is shown below.

The phase a arm voltages (similar for the other phases) are defined by:

$$\mathrm{vlu = (n\text{-}ma)*udc/n}$$

upper arm voltage

$$\mathrm{vl = ma*udc/n}$$

lower arm voltage where

n is the number of arm modules, but also (normally)
n = number of active leg modules = sum of active arm modules

ma is the number of low arm active modules (continuous from 0 to n due to PWM)
(n-ma) is the number of high arm active modules
udc is the DC-link (rail to rail) voltage
udc/n is the (average) module voltage

The phase a arm currents (similar for the other phases) are defined by:

$$iah = iacirc + iaout/2$$

upper arm current

$$ial = iacirc - iaout/2$$

lower arm current

The power load on the phase a (similar for the other phases) upper and lower arm modules are then simply calculated by:

$$Pah = v1u*iah = (n-ma) *udc/n*(iacirc + iaout/2)$$

power load on upper arm

$$Pal = v1*ial = ma*udc/n*(iacirc - iaout/2)$$

power load on lower arm

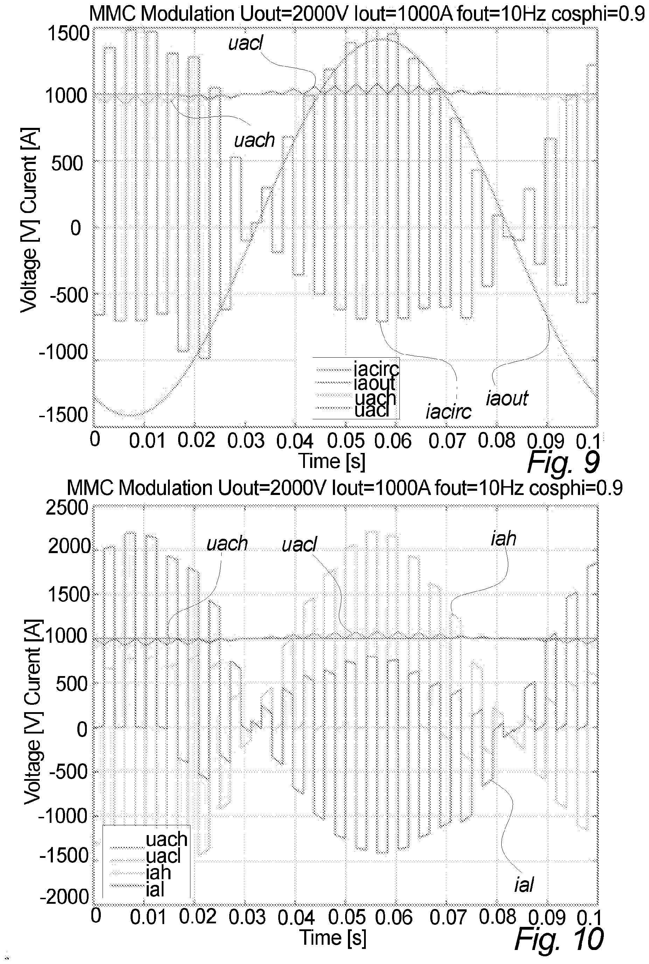

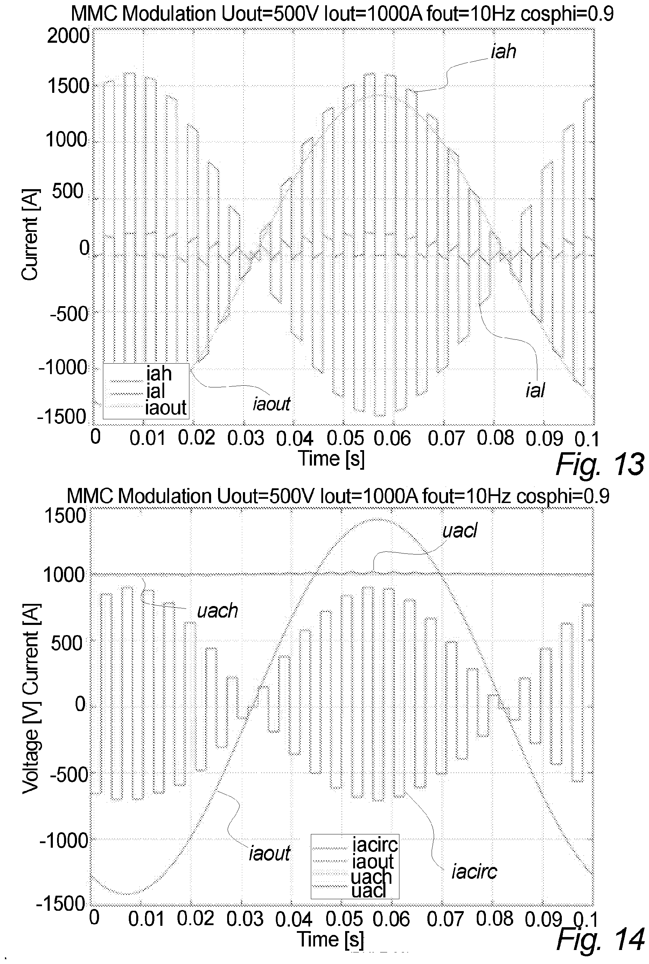

Now, an energy control cycle is defined, in which the phase voltages are clamped in an alternating fashion between the upper and lower rail potentials (voltage limits). Examples hereof are shown in figures 4, 9 and 14 for different operating points with a 10 Hz fundamental output frequency, and a 240 Hz energy control cycle. The energy control cycle is designed for module energy control at a relatively high frequency, i.e. the 240 Hz. Selection of the energy control cycle frequency is discussed further below. Following energy change relations are used:

$$Eah1 = Pah1*T1 = (n-ma1) *udc/n*(iacirc1 + iaout1/2)*T1$$

$$Eah2 = Pah2*T2 = (n-ma2) *udc/n*(iacirc2 + iaout2/2)*T2$$

$$Eal1 = Pal1*T1 = ma1*udc/n*(iacirc1 – iaout1/2)*T1$$

$$Eah2 = Pal2*T2 = ma2*udc/n*(iacirc2 – iaout2/2) *T2$$

Where

T1 is the time period for the first energy change
T2 is the time period for the second energy change
ma1 is the number of low arm active modules during T1
ma2 is the number of low arm active modules during T2
iacirc1 is the (average) circulating current during T1
iacirc2 is the (average) circulating current during T2
iaout1 is the (average) output current during T1
iaout2 is the (average) output current during T2
Pah1 is the (average) power during T1 on upper arm
Pah2 is the (average) power during T2 on upper arm

Pal1 is the (average) power during T1 on upper arm
Pal2 is the (average) power during T2 on upper arm
Eah1 is the energy change during T1 on upper arm
Eah2 is the energy change during T2 on upper arm
Ball is the energy change during T1 on lower arm
Eal2 is the energy change during T2 on lower arm

Now, the total energy change over a control cycle (T1 + T2) for the upper and lower arms can be described by:

$$Eah1 + Eah2 =$$

$$(n\text{-}ma1)*udc/n*(iacirc1+iaout1/2)*T1+(n\text{-}ma2)*udc/n*(iacirc2 + iaout2/2)*T2$$

$$Eal1 + Eal2 =$$

$$ma1*udc/n*(iacirc1 - iaout/2)*T1 + ma2*udc/n*(iacirc2 - iaout/2) *T2$$

If we consider the simple case of pure energy reset in both arms in each control cycle (total energy change forced to zero), following appears:

(Eq 1)

$$Eah1 + Eah2 = 0 =>$$

$$(n\text{-}ma1)*udc/n*(iacirc1+iaout1/2)*T1+(n\text{-}ma2)*udc/n*(iacirc2+iaout2/2)*T2$$

$$= 0$$

(Eq 2)

$$Eal1 + Eal2  = 0 =>$$

$$ma1*udc/n*(iacirc1 – iaout1/2)*T1+ma2*udc/n*(iacirc2–iaout2/2)*T2=0$$

Alternatively, and more generally, a controlled energy change could be commanded, e.g. to optimize operation and/or compensate for model and control errors. The reference signal for the controlled energy change could, for example, include a feedback term from the actually measured (or estimated/predicted) module voltages.

(Eq 3)

$$Eah1 + Eah2 = dEah =>$$

$$(n\text{-}ma1)*udc/n*(iacirc1+iaout1/2)*T1+(n\text{-}ma2)*udc/n*(iacirc2+iaout2/2)*T2$$

$$= dEah$$

(Eq 4)

$$Eal1 + Eal2  = dEal =>$$

$$ma1*udc/n*(iacirc1 - iaout/2)*T1 + ma2*udc/n*(iacirc2 - iaout/2) *T2 = dEal$$

where

dEah is the energy change during T1+T2 on upper arm
dEal is the energy change during T1+T2 on lower arm

In both cases, the energy change control is done by controlling the two (average) circulating currents during T1 and T2, i.e. iacirc1 and iacirc2. The two energy balance equations, (Eq 3) and (Eq 4), form a system with two inputs (iacirc1 and iacirc2) and two outputs (dEah and dEal). Thus it is possible to control the lower and upper arm energy levels independently by applying the control cycle containing the two time periods T1 and T2.

For the sake of simplicity, we assume here, in the following, that the total energy changes are controlled to zero, as shown in (Eq 1) and (Eq 2), and furthermore, that T1 = T2, i.e. the energy control cycle is divided into two equally long sub-periods in time. These conditions are also used in the example plots shown.

The principle works also for other cases, in fact the relation between T1 and T2, as well as the total control cycle period (T1+T2), can be made variable in time, and used for further optimization, e.g. reduction of total losses, peak currents etc., during operation.

(Eq 1) and (Eq 2) can be reduced using T1=T2, and removing common factors:

$$(\text{Eq 5})$$

$$(n\text{-}ma1)*(iacirc1 + iaout1/2) + (n\text{-}ma2)*(iacirc2 + iaout2/2) = 0$$

$$(\text{Eq 6})$$

$$ma1*(iacirc1 - iaout1/2) + ma2*(iacirc2 - iaout2/2) = 0$$

From (Eq 5) and (Eq 6), analytical expressions for iacirc1 and iacirc2 can be found by simple insertion and reduction, i.e. manually solving the two equations with two unknowns.

$$(\text{Eq 7})$$
$$iacirc2 = -(((n\text{-}ma2)*ma1 + (n\text{-}ma1)*ma2)*iaout2/2 +$$
$$(n\text{-}ma1)*ma1*iaout1)/((n\text{-}ma2)*ma1 - (n\text{-}ma1)*ma2);$$

$$(\text{Eq 8})$$
$$iacirc1 = -ma2/ma1*(iacirc2 - iaout2/2) + iaout1/2;$$

A number of special cases have to be solved, i.e. ma2=ma1, ma2=0, ma2=n, ma1=0, ma1=n, ma1=ma2, for that we go back to (Eq 5) and (Eq 6), and solve case by case:

$$ma1 = n \Rightarrow \quad iacirc2 = -iaout2/2$$
$$n*(iacirc1 - iaout1/2) + ma2*(-iaout2) = 0 \Rightarrow$$
$$iacirc1 = ma2/n*iaout2 + iaout1/2$$

$$ma1 = 0 \Rightarrow \quad iacirc2 = iaout2/2$$
$$n*(iacirc1 + iaout1/2) + (n\text{-}ma2)*iaout2 = 0 \Rightarrow$$
$$iacirc1 = -(n\text{-}ma2)/n*iaout2 - iaout1/2$$

$$ma2 = n \Rightarrow \quad iacirc1 = -iaout1/2$$
$$iacirc2 = ma1/n*iaout1 + iaout2/2$$

$$ma2 = 0 => \quad iacirc1 = iaout1/2$$

$$(n\text{-}ma1) *iaout1 + n*(iacirc2 + iaout2/2) = 0 =>$$

$$iacirc2 = -(n\text{-}ma1)/n *iaout1 - iaout2/2$$

$$ma1 = ma2 => \quad \text{No solution}$$

This no solution point, at ma1 = ma2, is also evident from the fact, that no energy can be redistributed between upper and lower arms, unless the voltage (ma) level is changed in the energy control cycle. In fact, a certain minimum change (distance between ma1 and ma2 values) is required in order to redistribute energy in an efficient way, i.e. without unreasonably big circulating currents.

The biggest possible distance between ma1 and ma2 values is always ensured here by alternatingly clamping to the outer (rail) potentials. This will minimize the necessary circulating currents for obtaining the arm energy reset in both upper and lower arm for a given load (output current). A resulting phase output voltage waveform example is shown in Figure 2, which indicates two '120 degree' periods, where the phase a voltage is clamped to the outer levels half of the time (every second energy cycle half-period), and then two 60 degree periods, where the levels are decided by phase b and c.

Now, with (Eq 7) and (Eq 8) or one of the special cases described above, command values for the circulating current in a phase leg (phase a here) can be calculated based on the actual (predicted) phase output current. In Figure 4, among others, the waveforms for MMC arm currents, and module voltages, over 1 fundamental period are shown, here the relationship between the circulating current, iacirc, and the phase output current, iaout, can be seen. The effective energy reset can be seen from the high and low arm (average) module voltages, they are reset to a certain (reference) voltage/energy level after each control cycle here.

The shown module voltage ripple, in Figure 4 among others, is unipolar due to the choice of the energy control cycle: uacl has its constant level at 1000 V and its ripple goes upwards (between 0.03s and 0.07 s), while uach also has its constant level at 1000 V but its ripple goes downwards (before 0.02 s and after 0.08 s).

It can easily be made bipolar by shifting the control period a quarter of the (here) defined energy cycle, thereby achieving a ripple voltage centered around the 1000 V constant voltage level. This is advantageous, in either reducing the peak voltage values, or increasing capacitor utilization.

The energy control cycle concept can be extended to all (3 or more) phase-legs in an (DC-AC) inverter, or all (6 or more) phase-legs in a AC-AC converter. In this way, all circulating currents in each energy cycle half-period can be coordinated, and optimized, e.g. for zero ripple (AC-) current in the DC-link. This is a nice option in converters with longer distances (10's to 1000's of meters) between inverters. This can for example be done by modifying the calculated circulating currents in a 3-phase inverter in the following way:

$$idc = Pdc/Vdc$$

$$sumicirc = iacirc + ibcirc + iccirc$$

$$iacirc = iacirc - (sumicirc - idc)/3$$

$$ibcirc = ibcirc - (sumicirc - idc)/3$$

$$iccirc = iccirc - (sumicirc - idc)/3$$

where

Pdc is the average DC-link power
Vdc is the DC-link voltage

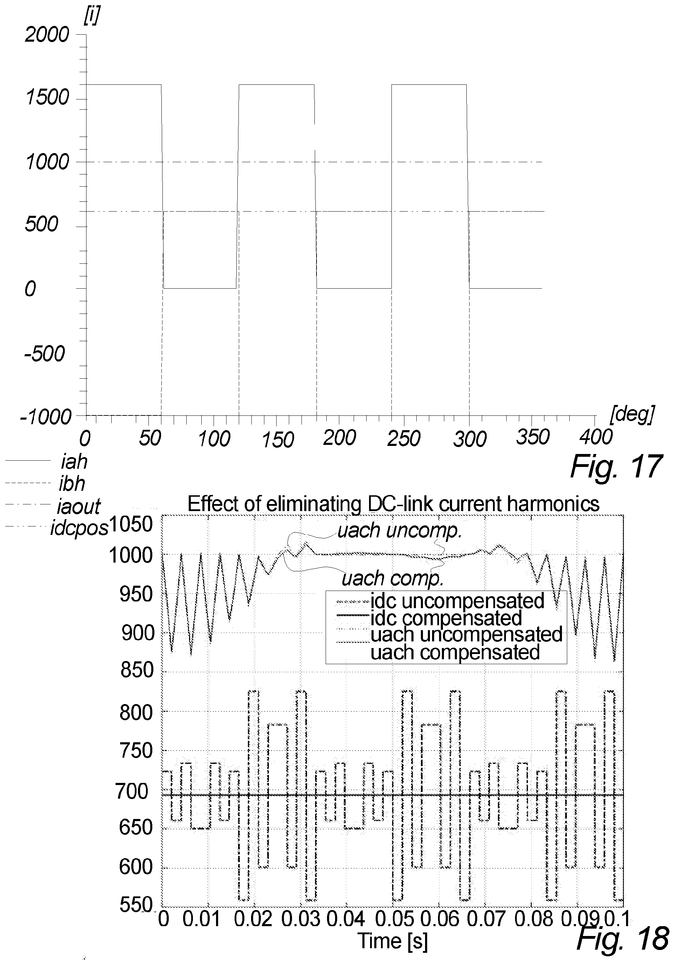

The effect of this is illustrated on figure 18, where it is seen that a constant DC-link current denoted idc compensated is obtained, whereas the module capacitor voltage denoted uach compensated deviates slightly from the ideal energy reset but within an acceptable range.

It is also possible to optimize for equal voltage ripple on all arm/capacitors in the whole converter, by allowing fast coordinated energy cycling between all legs, if that is feasible.

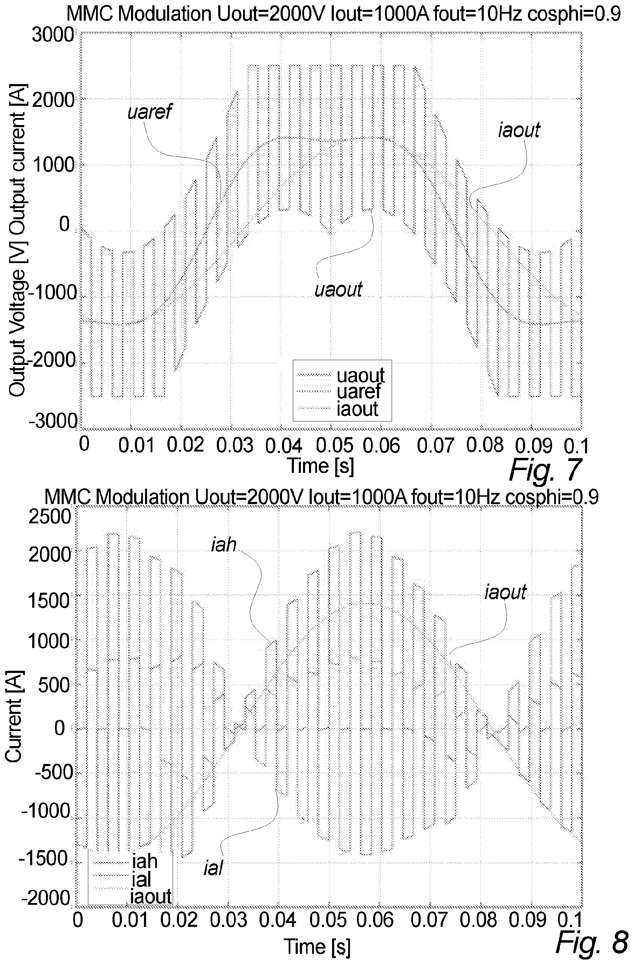

Figures 7, 8, 9, 10, 11 illustrate an example with phase shift between output phase voltage and output phase current (cosphi = 0.9).

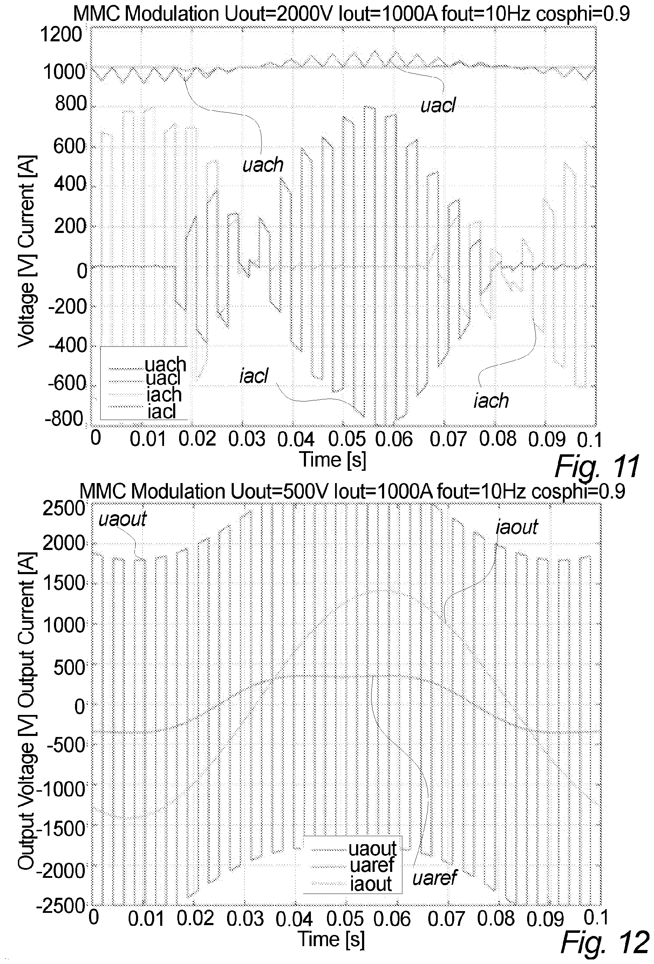

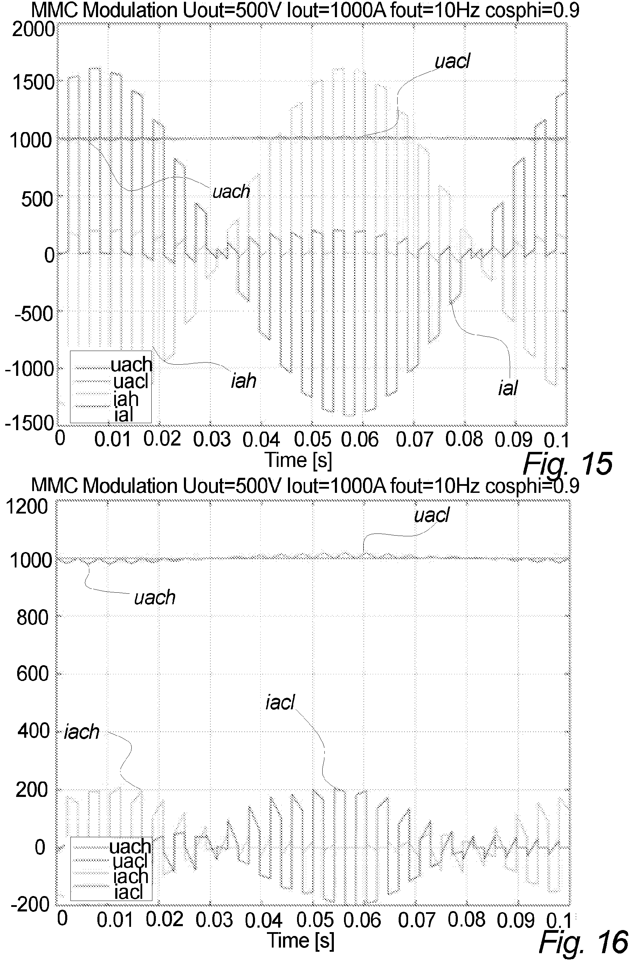

Figures 12, 13, 14, 15, 16 illustrate an example with a relative low output phase voltage, and with phase shift between output phase voltage and output phase current (cosphi = 0.9).

Figure 17 illustrates an embodiment of the invention. A MMC 6-level 2-leg inverter current waveforms for DC-output operation with alternating clamping and circulating current control for ideal DC-link current (i.e. no harmonic content). In figure 17 the following currents are illustrated idcpos, iah, ibh, iaout = -ibout = 1000A.

The Y-axis scaling is current in amps, and the X-axis is an arbitrary control period of 360 degrees divided in 6 (60 degrees) intervals here.

The output current (iaout) is 1000 A DC, and the output voltage (uabout) is 3000 V for 5 arm modules, each operating at a 1000V DC level, controlled by following modulation sequence (1 command per phase for each 60 degree interval) for phase leg a and b, respectively:

$$ma1 = [5 \ 3 \ 5 \ 3 \ 5 \ 3]$$

*modulation sequence leg a*

$$mb1 = [2 \ 0 \ 2 \ 0 \ 2 \ 0]$$

*modulation sequence leg b*

ma1 is the number of low arm active modules in phase leg a
mb1 is the number of low arm active modules in phase leg b
idcpos is the DC rail current
iah is the phase a high arm current'
ibh is the phase b high arm current
iaout is the (DC) output current (= -ibout = 1000A here)

The 'gain' between the DC-link current level and the output (DC here) current level is 5/3 here, corresponding the inverse of the voltage gain (3/5), so the output power equals the input power (losses disregarded here). So seen from the input-output terminals, this MMC operates as an ideal DC-DC converter without voltage or current ripple on either side, only some (AC) common mode voltage will be generated here due to the alternating voltage clamping. This is only possible, because the energy storage capacity in the MMC modules is utilized here, in contrast to a normal DC-DC converter (Buck or Boost), where the power/current ripple from PWM operation typically has to be handled by a DC-link capacitor.

Now, the (reference) values for iacirc and ibcirc can be calculated for obtain this 'ideal' DC converter operation:

$$iacirc = iah - iaout/2$$

$$ibcirc = ibh - ibout/2 = ibh + iaout/2$$

In the example in Figure 17 following current (constant levels in each interval) values are seen, or can be calculated:

$$idcpos = [\ 600 \quad 600 \quad 600 \quad 600 \quad 600 \quad 600]$$

$$iaout \ = [\ 1000 \ 1000 \quad 1000 \ 1000 \ 1000 \ 1000]$$

$$iah \quad = [\ 1600 \quad 0 \quad 1600 \quad 0 \quad 1600 \quad 0]$$

$$ibh \quad = [-1000 \quad 600 \ -1000 \quad 600 \ -1000 \quad 600]$$

$$iacirc \ = [\ 1100 \ -500 \quad 1100 \ -500 \quad 1100 \ -500]$$

$$ibcirc \ = [\ -500 \quad 1100 \ -500 \quad 1100 \ -500\ 1100]$$

This sequence actually obeys the energy reset rules/algorithms described above in this disclosure, which can easily be tested manually in this simple case, so beside the 'ideal' DC performance, on both input and output sides, there are also energy reset on both legs, so that this operation can continue forever.

The same approach, where the 'power ripple' is kept inside the inverter (or converter), can be expanded to more than two legs by super-position of any number of phase-phase loads. If two 3-phase inverters are connected directly back-to-back (i.e. DC rail lengths of a few meters), it will normally be beneficial to share the 'power ripple' load on all (6) available legs, in order to minimize the RMS current loading on the individual modules. On the other hand, if the inverters are far apart (i.e. DC rail lengths of many meters or even many kilometers), it might be more beneficial to minimize the (AC) ripple content in the DC-link current, and keep the power ripple inside each inverter by appropriate control of the circulating currents in the (local) inverter phase legs.

Coordinated energy cycling within a multi- (3 or more) phase inverter (or within groups of inverters) is especially beneficial, since the total multi-phase (reference) power flow is constant (or, at least, slowly ramping up/down), e.g. the power flow from a multi-phase generator. Therefore, the harmonic power oscillations (harmonics of the fundamental output frequency) seen in a phase can normally always be cancelled out instantaneously by similar (phase shifted) oscillations in the other phases, i.e. without the need for an energy storage. In this way, very small capacitance values are needed in each MMC module, if a high frequency energy control cycle can be used.

The energy control cycle described, involving alternating clamping between opposite DC-rail potentials, will give natural limits on the possible cycle frequency. For high frequency energy control cycling, there will be a penalty of increased number of necessary module switching's, in order to realise the frequent output voltage jumps. There could also be limitations due to dV/dt-limits on the output voltages (including common mode).

**List of reference numbers and figure overview**

Where nothing else is stated the references are the same at the figures. Further, it should be noted that the figures are made with reference to phase a, however it should be mentioned that similar figures of voltages and currents with reference to phase b and c could be made.

Figure 1 illustrates a circuit model of a complete 3-phase AC to 3-phase AC MMC

a,b,c are input phase connections
u,v,w are output phase connections
iah is the phase a high (=upper) arm current
ial is the phase a low (=lower) arm current
iaout is the phase a output current
v1u is a voltage source representing the n modules in the phase a high arm
v1 is a voltage source representing the n modules in the phase a low arm
R1 the total series resistance in the phase a high arm
R2 the total series resistance in the phase a low arm
L1 the total series inductance in the phase a high arm
L2 the total series inductance in the phase a low arm

Figure 2, 7, 12 illustrates examples of waveforms for MMC phase output voltage and current over 1 fundamental period.

uaout is phase a output voltage
uaref is phase a output reference voltage (without the clamping common mode component)

Figure 3, 8, 13 illustrates examples of waveforms for MMC arm currents over 1 fundamental period.

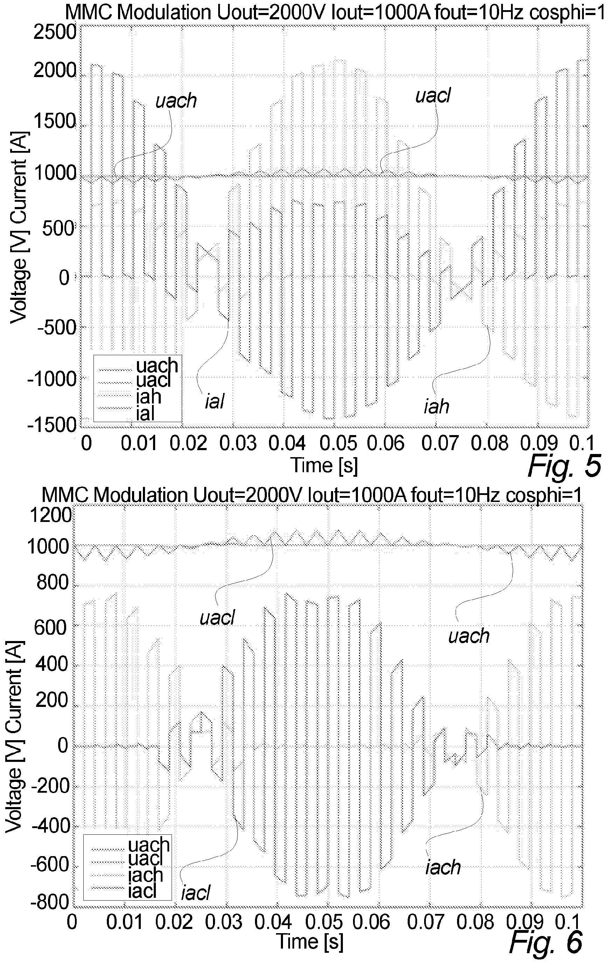

Figure 4, 5, 6, 9, 10, 11, 14, 15, 16 illustrates examples of waveforms for MMC module voltages and currents over 1 fundamental period.

iach is phase a high arm module current
iacl is phase a low arm module current
uach is phase a high arm module (average) capacitor voltage
uacl is phase a low arm module (average) capacitor voltage
iacirc is phase a circulating current

In figure 17 the following currents are illustrated

idcpos is the positive DC rail current
ibh is the phase b high arm current
iaout is the (DC) output current (= -ibout = 1000A here)

Figure 18 illustrates examples of the effect of eliminating DC-link current harmonics

idc is the DC-link current (compensated / uncompensated)
uach is the module capacitor voltage (compensated / uncompensated)

## Claims

1. A method of controlling the energy level of the arms (2, 3) of a multi-phase power converter having 3 or more phases, wherein the arms (2, 3) comprise a plurality of switching modules (7), the switching modules (7) comprise one or more capacitors (9) and one or more switches (8), wherein the switching modules (7) are controlled based on non-clamped reference phase voltages and further controlled in successive energy control periods by a control signal from a converter controller (14), wherein the energy levels of the individual arms (2, 3) are controlled in the successive energy control periods according to the following steps:

   - by switches (8) of a first subset of the switching modules (7), in a first part of an energy control period, clamping the highest positive phase output voltage of said 3 or more phases to a determined value having a first voltage potential, the first voltage potential being a first DC rail voltage potential, or a controllable distance from the first DC rail voltage potential, the controllable distance being below a module voltage,
   - by switches (8) of a second subset of the switching modules (7), in a second part of the energy control period, clamping the lowest negative phase output voltage of said 3 or more phases to a determined value having a second voltage potential, the second voltage potential being a second DC rail potential, or a controllable distance from the second DC rail voltage potential, the controllable distance being below a module voltage, wherein the first and second voltage potentials are different,
   - wherein said clamping to said first voltage potential in said first part of said energy control period and said clamping to said second voltage potential in said second part of said energy control period adds an additional common mode voltage to the phase voltages of all of said 3 or more phases, wherein said additional common mode voltage is the difference between the non- clamped reference phase voltages and the clamped phase output voltages,
   - in each of the first and second parts of the energy control period, calculating circulating current command values required to establish a desired energy level in the capacitors (9) at the end of the energy control period, and
   - controlling circulating currents in the arms (2, 3), based on the calculated current command values and synchronized to the clamped phase output voltages in order to establish a voltage level of the capacitors (9) required to establish the desired energy level in order to obtain an energy reset within the energy control period.

2. A method according to claim 1, wherein the circulating current is controlled in a square wave fashion.

3. A method according to any of the preceding claims, wherein the first and / or second voltage potential is kept at a controllable distance from the rail potential, below between 10% and 50% of the typical module voltage.

4. A method according to any of the preceding claims, wherein the converter controller is adapted to reset the energy level in the arm of the power converter by control of circulating currents within the power converter.

5. A method according to any of the preceding claims, wherein the energy level in the arm is reset or controlled to a determined level in each of the successive control periods.

6. A method according to any of the preceding claims, wherein the phase output voltages are clamped alternatingly between the first voltage potential and the second voltage potential without control delay.

7. Method according to any of the preceding claims, wherein the phase output voltage levels are clamped in an alternating fashion between the positive and the negative rail potentials by controlling the MMC switching sequence in such a way, that the average common mode voltage rate of change over time (dU/dt) effectively can be controlled and limited to any specified value by controlling a delay between switching the switches (8) preferably to less than 2 microseconds.

8. A method according to any of the preceding claims, wherein the output voltage levels are clamped in an alternating fashion between the positive and the negative rail potentials in a module energy control cycle, wherein the energy control cycle frequency is over 100 cycles per second.

9. A method according to any of the preceding claims, wherein the phase output voltages are clamped alternatingly between the first voltage potential and the second voltage potential in an energy control period optimized by continuous optimization of duty cycle split between clamping the phase output voltages to the first voltage potential and to the second voltage potential.

10. A method according to any of the preceding claims, wherein the phase output voltages are clamped alternatingly between the first voltage potential and the second voltage potential in an energy control period, wherein the frequency of the energy control period is continuously optimized and updated depending on load of the MMC.

11. A method according to any of the preceding claims, wherein the energy reset control is based on predicted values of load power, load current and output voltage in the energy control period.

12. A method according to any of the preceding claims, wherein the energy reset control includes a feedback from the individual modules at least including information of the capacitor voltage and wherein this feedback is used as basis for controlling at least one module in an arm according to a control strategy different from the control strategy controlling the other module of that arm.

13. A method according to any of the preceding claims, wherein the circulating current components used for energy reset control are controlled in a substantially square wave fashion.

14. A method according to any of the preceding claims, wherein the energy reset control is coordinated within the converter legs in such a way, that the DC-rail current RMS value is minimized by controlling all circulating currents in each energy cycle half-period.

15. A method according to any of the preceding claims, wherein the energy reset control is coordinated within all converter legs in such a way, that all converter module capacitor voltage ripple values are minimized by the converter controller (14) receiving feedback from the modules (7) at least including the level of the capacitor voltage.

**Patentansprüche**

1. Verfahren zum Steuern des Energieniveaus der Arme (2, 3) eines Mehrphasen-Leistungswandlers, der 3 oder mehr Phasen aufweist, wobei die Arme (2, 3) eine Vielzahl von Schaltmodulen (7) umfassen, wobei die Schaltmodule (7) einen oder mehrere Kondensatoren (9) und einen oder mehrere Schalter (8) umfassen, wobei die Schaltmodule (7) basierend auf nicht geklemmten Referenzphasenspannungen gesteuert werden und ferner in aufeinanderfolgenden Energiesteuerzeiträumen durch ein Steuersignal von einer Wandlersteuerung (14) gesteuert werden, wobei die Energieniveaus der einzelnen Arme (2, 3) in den aufeinanderfolgenden Energiesteuerzeiträumen gemäß den folgenden Schritten gesteuert werden:

   - durch Schalter (8) einer ersten Teilmenge der Schaltmodule (7) in einem ersten Teil eines Energiesteuerzeitraums, die die höchste positive Phasenausgangsspannung der 3 oder mehr Phasen auf einen bestimmten Wert, der ein erstes Spannungspotenzial aufweist, klemmen, wobei das erste Spannungspotenzial ein erstes DC-Betriebsspannungspotential oder ein steuerbarer Abstand von dem ersten DC-Betriebsspannungspotential ist, wobei der steuerbare Abstand unterhalb einer Modulspannung liegt,

- durch Schalter (8) einer zweiten Teilmenge der Schaltmodule (7), in einem zweiten Teil des Energiesteuerzeitraums, die die niedrigste negative Phasenausgangsspannung der 3 oder mehr Phasen auf einen bestimmten Wert, der ein zweites Spannungspotenzial aufweist, klemmen, wobei das zweite Spannungspotenzial ein zweites DC-Betriebsspannungspotential oder ein steuerbarer Abstand von der zweiten DC-Betriebsspannungspotential ist, wobei der steuerbare Abstand unterhalb einer Modulspannung liegt, wobei sich das erste und das zweite Spannungspotenzial unterscheiden,

- wobei das Klemmen an das erste Spannungspotenzial in dem ersten Teil des Energiesteuerzeitraums und das Klemmen an das zweite Spannungspotenzial in dem zweiten Teil des Energiesteuerzeitraums eine zusätzliche Gleichtaktspannung an die Phasenspannungen aller der 3 oder mehr Phasen hinzufügt, wobei die zusätzliche Gleichtaktspannung die Differenz zwischen der nicht geklemmten Referenzphasenspannungen und den geklemmten Phasenausgangsspannungen ist,

- in jedem des ersten und des zweiten Teils des Energiesteuerzeitraums, Berechnen von Ausgleichsstrombefehlswerten, die erforderlich sind, um ein gewünschtes Energieniveau in den Kondensatoren (9) an dem Ende des Energiesteuerzeitraums einzurichten, und

- Steuern von Ausgleichsströmen in den Armen (2, 3) basierend auf den berechneten Strombefehlswerten und synchronisiert auf die geklemmten Phasenausgangsspannungen, um ein Spannungsniveau der Kondensatoren (9) einzurichten, das erforderlich ist, um das gewünschte Energieniveau einzurichten, um eine Energierücksetzung innerhalb des Energiesteuerzeitraums zu erhalten.

2.  Verfahren nach Anspruch 1, wobei der Ausgleichsstrom in einer Rechteckwellenform gesteuert wird.

3.  Verfahren nach einem der vorstehenden Ansprüche, wobei das erste und/oder das zweite Spannungspotenzial in einem steuerbaren Abstand von dem der Betriebsspannung, unterhalb zwischen 10 % und 50 % der typischen Modulspannung gehalten wird.

4.  Verfahren nach einem der vorstehenden Ansprüche, wobei die Wandlersteuerung angepasst ist, um das Energieniveau in dem Arm des Leistungswandlers durch Steuern von Ausgleichsströmen innerhalb des Leistungswandlers zurückzusetzen.

5.  Verfahren nach einem der vorstehenden Ansprüche, wobei das Energieniveau in dem Arm auf ein bestimmtes Niveau in jedem der aufeinanderfolgenden Steuerzeiträumen zurückgesetzt oder gesteuert wird.

6.  Verfahren nach einem der vorstehenden Ansprüche, wobei die Phasenausgangsspannungen abwechselnd zwischen dem ersten Spannungspotenzial und dem zweiten Spannungspotenzial ohne Steuerverzögerung geklemmt werden.

7.  Verfahren nach einem der vorstehenden Ansprüche, wobei die Phasenausgangsspannungsniveaus abwechselnd zwischen dem positiven und dem negativen Betriebspotential durch Steuern der MMC-Umschaltsequenz derart geklemmt werden, dass die durchschnittliche Gleichtaktspannungsänderungsrate im Laufe der Zeit (dU/dt) effektiv gesteuert und auf einen beliebigen spezifizierten Wert durch Steuern einer Verzögerung zwischen dem Schalten der Schalter (8) vorzugsweise auf weniger als 2 Mikrosekunden begrenzt werden kann.

8.  Verfahren nach einem der vorstehenden Ansprüche, wobei die Ausgangsspannungsniveaus auf abwechselnde Weise zwischen dem positiven und dem negativen Betriebspotential in einem Modulenergiesteuerzyklus geklemmt werden, wobei die Energiesteuerzyklusfrequenz über 100 Zyklen pro Sekunde beträgt.

9.  Verfahren nach einem der vorstehenden Ansprüche, wobei die Phasenausgangsspannungen abwechselnd zwischen dem ersten Spannungspotenzial und dem zweiten Spannungspotenzial in einem Energiesteuerzeitraum geklemmt werden, der durch kontinuierliche Optimierung des Arbeitszyklusaufteilens zwischen dem Klemmen der Phasenausgangsspannungen an das erste Spannungspotenzial und an das zweite Spannungspotenzial optimiert wird.

10.  Verfahren nach einem der vorstehenden Ansprüche, wobei die Phasenausgangsspannungen abwechselnd zwischen dem ersten Spannungspotenzial und dem zweiten Spannungspotenzial in einem Energiesteuerzeitraum geklemmt werden, wobei die Frequenz des Energiesteuerzeitraums in Abhängigkeit von der Last des MMC kontinuierlich optimiert und aktualisiert wird.

**11.** Verfahren nach einem der vorstehenden Ansprüche, wobei die Energierücksetzsteuerung auf vorhergesagten Werten von Lastleistung, Laststrom und Ausgangsspannung in dem Energiesteuerzeitraum basiert.

**12.** Verfahren nach einem der vorstehenden Ansprüche, wobei die Energierücksetzsteuerung eine Rückmeldung von den einzelnen Modulen einschließt, mindestens einschließlich Informationen der Kondensatorspannung, und wobei diese Rückmeldung als Basis zum Steuern mindestens eines Moduls in einem Arm gemäß einer Steuerstrategie verwendet wird, die sich von der Steuerstrategie unterscheidet, die das andere Modul dieses Arms steuert.

**13.** Verfahren nach einem der vorstehenden Ansprüche, wobei die für die Energierücksetzsteuerung verwendeten Ausgleichsstromkomponenten in einer im Wesentlichen Rechteckwellenform gesteuert werden.

**14.** Verfahren nach einem der vorstehenden Ansprüche, wobei die Energierücksetzsteuerung derart innerhalb der Wandlerschenkel abgestimmt ist, dass der DC-Betriebsstrom-RMS-Wert durch Steuern aller Ausgleichsströme in jeder Energiezyklushalbperiode minimiert wird.

**15.** Verfahren nach einem der vorstehenden Ansprüche, wobei die Energierücksetzsteuerung innerhalb aller Wandlerschenkel derart abgestimmt ist, dass alle Wandlermodulkondensatorspannungswelligkeitswerte minimiert werden, indem die Wandlersteuerung (14) Rückmeldung von den Modulen (7) empfängt, die mindestens das Niveau der Kondensatorspannung einschließen.

**Revendications**

**1.** Procédé de commande du niveau d'énergie des bras (2, 3) d'un convertisseur de puissance polyphasé présentant au moins 3 phases, dans lequel les bras (2, 3) comprennent une pluralité de modules de commutation (7), les modules de commutation (7) comprennent un ou plusieurs condensateurs (9) et un ou plusieurs commutateurs (8), dans lequel les modules de commutation (7) sont commandés sur la base de tensions de phase de référence non bloquées et commandés en outre dans des périodes de commande d'énergie successives par un signal de commande provenant d'un dispositif de commande de convertisseur (14), dans lequel les niveaux d'énergie des bras individuels (2, 3) sont commandés dans les périodes de commande d'énergie successives selon les étapes suivantes :

- par des commutateurs (8) d'un premier sous-ensemble des modules de commutation (7), dans une première partie d'une période de commande d'énergie, le blocage de la tension de sortie de phase positive la plus élevée desdites au moins 3 phases à une valeur déterminée présentant un premier potentiel de tension, le premier potentiel de tension étant un premier potentiel de tension de rail de CC ou une distance commandable par rapport au premier potentiel de tension de rail de CC, la distance commandable étant inférieure à une tension de module,
- par des commutateurs (8) d'un second sous-ensemble des modules de commutation (7), dans une seconde partie de la période de commande d'énergie, le blocage de la tension de sortie de phase négative la plus basse desdites au moins 3 phases à une valeur déterminée présentant un second potentiel de tension, le second potentiel de tension étant un second potentiel de rail de CC ou une distance commandable par rapport au second potentiel de rail de CC, dans lequel la distance commandable est inférieure à une tension de module, les premier et second potentiels de tension étant différents,
- dans lequel ledit blocage audit premier potentiel de tension dans ladite première partie de ladite période de commande d'énergie et ledit blocage audit second potentiel de tension dans ladite seconde partie de ladite période de commande d'énergie ajoute une tension de mode commun supplémentaire aux tensions de phase de l'ensemble desdites au moins 3 phases, dans lequel ladite tension de mode commun supplémentaire est la différence entre les tensions de phase de référence non bloquées et les tensions de sortie de phase bloquées,
- dans chacune des première et seconde parties de la période de commande d'énergie, le calcul des valeurs de commande de courant circulant requises pour établir un niveau d'énergie souhaité dans les condensateurs (9) à la fin de la période de commande d'énergie et
- la commande des courants circulants dans les bras (2, 3), sur la base des valeurs de commande de courant calculées et synchronisées aux tensions de sortie de phase bloquées afin d'établir un niveau de tension des condensateurs (9) requis pour établir le niveau d'énergie souhaité afin d'obtenir une réinitialisation d'énergie au sein de la période de commande d'énergie.

**2.** Procédé selon la revendication 1, dans lequel le courant circulant est commandé selon une forme d'onde carrée.

3. Procédé selon l'une quelconque des revendications précédentes, dans lequel le premier et/ou le second potentiel de tension est maintenu à une distance commandable par rapport au potentiel de rail, en-dessous entre 10 % et 50 % de la tension de module caractéristique.

4. Procédé selon l'une quelconque des revendications précédentes, dans lequel le dispositif de commande de convertisseur est conçu pour réinitialiser le niveau d'énergie dans le bras du convertisseur de puissance par commande de courants circulants au sein du convertisseur de puissance.

5. Procédé selon l'une quelconque des revendications précédentes, dans lequel le niveau d'énergie dans le bras est réinitialisé ou commandé à un niveau déterminé dans chacune des périodes de commande successives.

6. Procédé selon l'une quelconque des revendications précédentes, dans lequel les tensions de sortie de phase sont bloquées en alternance entre le premier potentiel de tension et le second potentiel de tension sans retard de commande.

7. Procédé selon l'une quelconque des revendications précédentes, dans lequel les niveaux de tension de sortie de phase sont bloqués d'une manière alternée entre les potentiels de rail positif et négatif par commande de la séquence de commutation du MMC de manière à ce que le taux de changement moyen de tension de mode commun dans le temps (dU/dt) puisse effectivement être commandé et limité à toute valeur spécifiée par commande d'un retard entre la commutation des commutateurs (8) de préférence à moins de 2 microsecondes.

8. Procédé selon l'une quelconque des revendications précédentes, dans lequel les niveaux de tension de sortie sont bloqués d'une manière alternée entre les potentiels de rail positif et négatif dans un cycle de commande d'énergie de module, dans lequel la fréquence de cycle de commande d'énergie est supérieure à 100 cycles par seconde.

9. Procédé selon l'une quelconque des revendications précédentes, dans lequel les tensions de sortie de phase sont bloquées en alternance entre le premier potentiel de tension et le second potentiel de tension dans une période de commande d'énergie, optimisée par optimisation continue de la division de cycle de service entre le blocage des tensions de sortie de phase au premier potentiel de tension et au second potentiel de tension.

10. Procédé selon l'une quelconque des revendications précédentes, dans lequel les tensions de sortie de phase sont bloquées en alternance entre le premier potentiel de tension et le second potentiel de tension dans une période de commande d'énergie, dans lequel la fréquence de la période de commande d'énergie est optimisée en continu et mise à jour en fonction d'une charge du MMC.

11. Procédé selon l'une quelconque des revendications précédentes, dans lequel la commande de réinitialisation d'énergie est basée sur des valeurs prédites de puissance de charge, de courant de charge et de tension de sortie dans la période de commande d'énergie.

12. Procédé selon l'une quelconque des revendications précédentes, dans lequel la commande de réinitialisation d'énergie comporte un retour provenant des modules individuels, comportant au moins des informations de la tension de condensateur et dans lequel ce retour est utilisé en tant que base pour commander au moins un module dans un bras selon une stratégie de commande différente de la stratégie de commande commandant l'autre module de ce bras.

13. Procédé selon l'une quelconque des revendications précédentes, dans lequel les composants de courant circulant utilisés pour la commande de réinitialisation d'énergie sont commandés selon une forme d'onde carrée.

14. Procédé selon l'une quelconque des revendications précédentes, dans lequel la commande de réinitialisation d'énergie est coordonnée au sein des pattes de convertisseur de manière à ce que la valeur RMS de courant de rail de CC soit réduite au minimum par commande de tous les courants circulants dans chaque demi-période de cycle d'énergie.

15. Procédé selon l'une quelconque des revendications précédentes, dans lequel la commande de réinitialisation d'énergie est coordonnée au sein de toutes les pattes de convertisseur de manière à ce que toutes les valeurs d'ondulation de tension de condensateur de module de convertisseur soient réduites au minimum par le dispositif de commande de convertisseur (14) recevant un retour provenant des modules (7) comportant au moins le niveau de la tension de condensateur.

Fig. 1

MMC Modulation Uout=2000V Iout=1000A fout=10Hz cosphi=1

Fig. 2a

Fig. 2b

MMC Modulation Uout=2000V Iout=1000A fout=10Hz cosphi=1

Fig. 3

MMC Modulation Uout=2000V Iout=1000A fout=10Hz cosphi=1

Fig. 4

MMC Modulation Uout=2000V Iout=1000A fout=10Hz cosphi=1

*Fig. 5*

MMC Modulation Uout=2000V Iout=1000A fout=10Hz cosphi=1

*Fig. 6*

**MMC Modulation Uout=2000V Iout=1000A fout=10Hz cosphi=0.9**

*Fig. 7*

**MMC Modulation Uout=2000V Iout=1000A fout=10Hz cosphi=0.9**

*Fig. 8*

Fig. 9

Fig. 10

MMC Modulation Uout=2000V Iout=1000A fout=10Hz cosphi=0.9

*Fig. 11*

MMC Modulation Uout=500V Iout=1000A fout=10Hz cosphi=0.9

*Fig. 12*

MMC Modulation Uout=500V Iout=1000A fout=10Hz cosphi=0.9

*Fig. 13*

MMC Modulation Uout=500V Iout=1000A fout=10Hz cosphi=0.9

*Fig. 14*

MMC Modulation Uout=500V Iout=1000A fout=10Hz cosphi=0.9

*Fig. 15*

MMC Modulation Uout=500V Iout=1000A fout=10Hz cosphi=0.9

*Fig. 16*

Fig. 17

iah
ibh
iaout
idcpos

Effect of eliminating DC-link current harmonics

uach uncomp.

uach comp.

idc uncompensated
idc compensated
uach uncompensated
uach compensated

Time [s]

Fig. 18

**EP 3 571 757 B1**

**Patent documents cited in the description**

- CN 104993533
- WO 2015117637 A